(19) Europäisches Patentamt
European Patent Office
Office européen des brevets

(11) **EP 3 410 292 A1**

(12) **EUROPEAN PATENT APPLICATION**

(43) Date of publication:
**05.12.2018 Bulletin 2018/49**

(51) Int Cl.:
***G06F 7/535*** (2006.01)

(21) Application number: **17174335.4**

(22) Date of filing: **02.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Koninklijke Philips N.V.**
**5656 AE Eindhoven (NL)**

(72) Inventor: **TOLHUIZEN, Ludovicus Marinus Gerardus Maria**
**5656 AE Eindhoven (NL)**

(74) Representative: **de Haan, Poul Erik et al**
**Philips International B.V.**
**Philips Intellectual Property & Standards**
**High Tech Campus 5**
**5656 AE Eindhoven (NL)**

(54) **CALCULATIONS WITH REDUCED TIME DEPENDENCE ON THE INPUT**

(57) Some embodiments are directed to a calculator (100) with reduced time dependence on the input. The calculator being configured to compute an integer arithmetic operation (g). The calculator comprising perform an iterated approximation to obtain a series of approximations of the operation result, wherein the iteration is applied a predetermined number of times which is independent from a received first input (Y).

Fig. 1

**Description**

FIELD OF THE INVENTION

The invention relates to a calculator, a compiler device, a calculating method, a compiling method, and a computer readable medium.

BACKGROUND OF THE INVENTION

A cryptographic primitive is called secure in the black-box model, if an attacker who only has knowledge of the inputs and outputs of the primitive cannot elevate his rights, e.g., obtain secret keys, sign messages, decrypt messages, etc. However, in practice attackers often do not operate in the black-box model, and in fact do have more information than just the inputs and outputs. For example, in the grey-box model, it is assumed that an attacker has access to some information related to the execution of the primitive. These additional sources of information are called 'side-channels'. For example, side-channels include the amount of time that an operation took, or the amount of power that was consumed, etc. In an even stronger model, the so-called white-box model, and attacker has full access to all internal variables of the primitive. Implementation that resist white-box attacks, are sometimes implemented as an encoded table network operating on encoded data. Interestingly, attacks developed in the context of the grey-box model can sometimes be effective against white-box implementations as well. Accordingly, avoiding attacks under the grey-box model can be an effective countermeasure in the white-box model too.

One important side-channel is the timing of operations. Such attacks are illustrated in the paper "Timing Attacks on Implementations of Diffie-Hellman, RSA, DSS, and Other Systems", by Paul C. Kocher.

There is thus an interest to limit the amount of timing related side-channel information that is leaked while the cryptographic operation is performed. In practice, a side-channel resistant implementation may try to strengthen each of its parts against side-channel leakage. If each operation used in implementing a cryptographic primitive does not leak side-channel information, there is a good chance that side-channel leakage of the sum of its part is also reduced.

Some operations have proven to be particularly difficult to protect against side-channel leakage: for example, performing an integer division. In the report "SAFECrypto D7.1 State-of-the-Art in Physical Side-Channel Attacks and Resistant Technologies" it is acknowledged that timing attacks may exploit differences in time required by a device to perform specific operations, such as the non-constant time to execute a division. However, no constant-time algorithm for integer division is provided. Instead, countermeasures such as adding noise or blinding data is suggested.

The paper "A Protected Division Algorithm" by Marc Joye and Karine Villegas addresses the problem protecting division against side-channel leakage. Although their algorithm seems to succeed in reducing leakage from the amount of power used, the algorithm is not constant-time. In fact, the algorithm's running time depends in large part on the size of the inputs. This paper is referred to as Joye & Villegas.

There is thus a need for a division algorithm for which the running time has a reduced dependence on the input.

SUMMARY OF THE INVENTION

The existing solutions to reduce the correlation between the time needed to execute a division and the inputs either try to circumvent the problem by masking the operation, or try to reduce the relationship by adding noise, such as dummy operations. None of the existing approaches can tackle this problem head-on with a division algorithm that actually reduces the correlation itself. It turns out that the approach that the inventor found to solve the division problem is also applicable to other arithmetic operations.

A calculator which is configured to compute an integer arithmetic operation is provided. The calculator comprises

- an input interface configured to receive an integer first input, the calculator being configured to compute the result of applying the integer arithmetic operation to at least the first input, and
- a processor circuit configured to

  - obtain an initial approximation of the operation result from the first input,
  - perform an iterated approximation to obtain a series of approximations of the operation result, the iterated approximation comprising

    - in a first iteration, applying an integer function to the initial approximation obtaining an approximation in the series,
    - in subsequent iterations, obtaining a next approximation in the series by applying the integer function to the approximation in the series previously computed by the integer function, the integer function converging to at least within a threshold of the operation result, wherein the iteration is applied a predetermined number of times which is independent from the received first input,

- obtain the operation result from an approximation in the series.

Compared to conventional division algorithms the number of iterations does not depend on the input, and thus has reduced time dependence on the input. For example, the algorithms of Joye and Villegas division comprise a loop, having a number of iterations that depends on the input.

The initial approximation can be obtained in various ways. For example, the initial approximation can be obtained from one or more tables. For example, the initial approximation can be obtained from a further approximation algorithm; the difference being that the further approximation algorithm does not need to be as precise as the iterations of the integer function.

The calculator is an electronic device. For example, the calculator may be particular a mobile electronic device, such as a mobile phone, tablet etc. The calculator may be a set-top box, smart-card, computer, and the like. Constant time division can be used in any algorithm, e.g., any computer program, for which there is a desire to reduce the amount of side-channel leakage. Reducing side-channels may make reverse engineering harder, e.g., if time consumption reveals information about the operation of the device. Reducing side-channels may also improve security, e.g., if the time consumption is correlated to sensitive information, such as a cryptographic key.

The calculation device and calculation method described herein may be applied in a wide range of practical applications. For example, it may be used to (partly) obfuscate the execution of proprietary algorithm in software, so as to complicate reverse engineering of this algorithm.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc. Preferably, the computer program product comprises non-transitory program code stored on a computer readable medium for performing a method according to the invention when said program product is executed on a computer.

In a preferred embodiment, the computer program comprises computer program code adapted to perform all the steps of a method according to the invention when the computer program is run on a computer. Preferably, the computer program is embodied on a computer readable medium.

Another aspect of the invention provides a method of making the computer program available for downloading. This aspect is used when the computer program is uploaded into, e.g., Apple's App Store, Google's Play Store, or Microsoft's Windows Store, and when the computer program is available for downloading from such a store.

BRIEF DESCRIPTION OF THE DRAWINGS

Further details, aspects, and embodiments of the invention will be described, by way of example only, with reference to the drawings. Elements in the figures are illustrated for simplicity and clarity and have not necessarily been drawn to scale. In the Figures, elements which correspond to elements already described may have the same reference numerals. In the drawings,

Fig. 1 schematically shows an example of an embodiment of a calculator,
Fig. 2a schematically shows an example of an embodiment of obtaining an initial approximation of an operation result from a first input,
Fig. 2b schematically shows an example of an embodiment of obtaining an initial approximation of an operation result from a first input,
Fig. 2c schematically shows an example of an embodiment of obtaining an initial approximation of an operation result from a first input,
Fig. 3 schematically shows an example of an embodiment of a calculation method,
Fig. 4a schematically shows an example of an embodiment of a compiler device,
Fig. 4b schematically illustrates an example of parsing an arithmetic expression,
Fig. 4c schematically shows an example of an embodiment of a compiling method,
Fig. 5a schematically shows a computer readable medium having a writable part comprising a computer program according to an embodiment,
Fig. 5b schematically shows a representation of a processor system according to an embodiment.

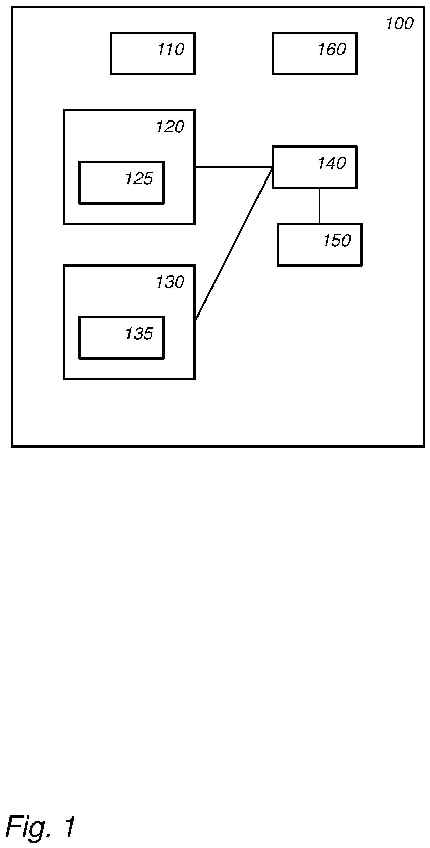

List of Reference Numerals in figures 1, 2a-2c, 4a, and 4b:

| | |
|---|---|
| 100 | a calculator |
| 110 | an input/output interface |
| 120 | an initial approximation unit |
| 125 | an initial approximation table |
| 130 | an iteration unit |
| 135 | an integer function unit |
| 140 | a storage |
| 150 | a correction unit |
| 160 | a conversion unit |
| 200 | a first input |
| 201-206 | a digit in a fixed-radix or mixed-radix format |
| 212, 242, 272 | the position in the sequence of the most-significant non-zero digit |
| 243, 273 | the value of the most-significant non-zero digit |
| 274 | the value of the next most-significant digit |
| 225,255, 285 | an initial approximation table |
| 230,260, 290 | an initial approximation |
| 410 | an arithmetic expression |
| 420, 421, 422 | a primitive arithmetic operator |
| 431, 432, 433,434 | an arithmetic input |
| 440 | a compiler device |
| 442 | an input/output interface |
| 444 | a parser |
| 446 | a code generator |

DETAILED DESCRIPTION OF THE EMBODIMENTS

While this invention is susceptible of embodiment in many different forms, there are shown in the drawings and will herein be described in detail one or more specific embodiments, with the understanding that the present disclosure is to be considered as exemplary of the principles of the invention and not intended to limit the invention to the specific embodiments shown and described.

In the following, for the sake of understanding, elements of embodiments are described in operation. However, it will be apparent that the respective elements are arranged to perform the functions being described as performed by them.

Further, the invention is not limited to the embodiments, and the invention lies in each and every novel feature or combination of features described herein or recited in mutually different dependent claims.

Fig. 1 schematically shows an example of an embodiment of a calculator 100. The calculator is configured to compute an integer arithmetic operation so that the time needed to execute the integer arithmetic operation has a reduced time dependence on the input to the integer arithmetic operation. In fact, in an embodiment the remaining cause for time dependency are platform specific caused by cache hits or misses, page faults, and the like. In an embodiment, such remaining causes may be eliminated by platform specific countermeasure, e.g., disabling the cache during execution of the arithmetic operation, and/or using non-swappable memory, etc. In any case, the time dependency in existing division algorithms is so large that the magnitude of an input, e.g., e.g. its logarithm, is almost exactly revealed. In embodiments, this large side-channel may be eliminated, while at best leaving the mentioned smaller order platform specific time dependencies. Generally speaking, the less information is leaked the harder it is for an attacker to mount a side-channel attack.

There is an interest in developing a general-purpose compiler that can compile code in such a manner that it has increased resistance against side-channel attacks. Such a compiler could for example be used by a programmer who is not aware of all possible attacks and their counter measures, yet still produce code which includes at least basis hardening. For such a compiler, it is needed that it can translate common arithmetic operations such as division in a side-channel resistance manner. For example, the compiling device may comprise an input interface for receiving an arithmetic expression, and a processor circuit configured for parsing the arithmetic expression obtaining a number of arithmetic operations. The compiling device may implement arithmetic operations such as addition, subtraction and multiplication in an RNS number system, and may use an embodiment for operations such as division.

Examples of integer arithmetic operations include division of a fixed integer $M$ by an input $Y$ and rounding the result, e.g., $\left\lceil \dfrac{M}{Y} \right\rceil$. An arithmetic operation may also involve more than one input, e.g., the quotient operation $\lfloor X/Y \rfloor$. Below we will first focus on arithmetic operations of a single input.

Calculator 100 comprises an input interface 110 and an output interface, also represented in Fig. 1 with reference numeral 110. The input interface 110 is configured to receive an integer first input $Y$. Calculator 100 is configured to compute the result of applying the integer arithmetic operation to the first input $Y$. We will denote the desired outcome of the calculator as the 'operation result'. As noted there may be additional inputs, e.g., $X$, which could also be part of the arithmetic operation.

If we denote the integer arithmetic operation, with a function $g$, e.g., a function $g: A \rightarrow B$, wherein $A$ and $B$ are some subset of N then it may be the goal of the calculator 100 to compute $g(Y)$; that is the operation result $g(Y)$. We may have 0 in N or not as convenient. For example, in embodiments, both the domain and the image may be the integers $[0, 2^n)$ for some value of $n$, e.g., 8, 16, 32, 64, etc. Note that there is no reason that domain or image should be restricted to the natural word size of the platform. In fact, for some cryptographic application large integer arithmetic is needed. Integers can be represented as a sequence of digits to accommodate larger integers.

The inventor realized that substantially constant time integer arithmetic can be achieved using a combination of a number of insights. One insight was that rough approximations to the operation result may be obtained in constant time in various ways, e.g., using table look-up, or through other means (see below for examples).

Furthermore, he realized that approximation could also be used to obtain the operation result exactly. The conventional arithmetic algorithms that aim to directly compute the operation result is thus replaced with an approximating algorithm that converges to the correct result, or at least to within some threshold thereof. For example, Joye & Villegas start their protected division algorithm from the 'classical binary pencil-and-paper method' that directly computes the operation result, but suffers a large time dependency because of it. The approximating algorithm could be run a constant number of iterations.

This number of iterations is chosen such that the approximating algorithm is known to arrive at the operation result, or at least to within a threshold thereof. A threshold may be a maximum difference between the correct operation result and the final approximation in the series. For example, in an embodiment, the algorithm runs with the fixed number of iterations and provides a result that lies in the range starting from the operation result minus a first threshold to the operation result plus a second threshold, e.g., $[g(Y)-a, g(Y)+b]$. For example, in a worked example presented below, the final iteration is known to give a result that lies within the range $[g(Y), g(Y)+1]$. In other words, after the fixed number of iterations only a fixed, finite number of possible results are left. Moreover, the number of possible results that are left after the main iteration does not depend on the inputs, in particular not on input $Y$. In the first example above, the number of possible result may be $a+b+1$. In the second example, the number of possible results is 2.

Unfortunately, in conventional approximations the required number of iterations to may have to be quite large if the correct result is to be found for any input through successive approximation. For example, approximating a division requires a large number of iterations if the first input $Y$ is small, and thus the operation result is large.

The inventor realized that by starting the iterated approximation with the rough approximation that could be computed in constant time, the required number of iterations can be limited for any input. In other words, in a first phase a rough (initial) approximation is found, and in a second phase the operation result is found by running an approximation process starting from the rough approximation. The number of iterations in the second phase is fixed to the number of iterations needed for the worst-case input. However, because the second phase is started from a rough approximation the worst case is better than without the first phase. The iterated approximation may be a so-called 'fixed-point iteration, in which a function is iterated to converge to a fixed point of the function (not to be confused with fixed-point arithmetic). In embodiments, such a fixed-point iteration may be adapted to an integer version, e.g., by rounding the iterated function, e.g., rounding up, down or to the nearest integer.

With reference to Fig. 1 possible embodiments are discussed. The execution of the algorithms is implemented in a processor circuit, examples of which are shown below. Fig. 1 shows functional units that may be functional units of the processor circuit. For example, Fig. 1 may be used as a blueprint of a possible functional organization of the processor circuit. The processor circuit is not shown separate from the units in Fig. 1. For example, the functional units shown in Fig. 1 may be wholly or partially be implemented in computer instructions that are stored at calculator 100 and are executable by a microprocessor of calculator 100. In hybrid embodiments, functional units are implemented partially in hardware, e.g., as coprocessors, e.g., crypto coprocessors, etc., and partially in software stored and executed on calculator 100.

Calculator 100 comprises an initial approximation unit configured to obtain an initial approximation of the operation result from the first input. There are a number of ways to produce an initial approximation for which execution time is substantially independent of the input, e.g., has a reduced dependency or correlation on the input.

In an embodiment, the storage stores an initial approximation table. The initial approximation may be obtained by initial approximation unit 120 from the initial approximation table. For example, the initial approximation table may be stored in a storage 150 of calculator 100.

For example, the first input ($Y$) is represented in the calculator as a sequence of digits in a fixed-radix or mixed-radix format. Let $m_0, m_1,...,m_{k-1}$ be integers larger than or equal to two. Let $P_0=1$ and $P_j = \prod_{i=0}^{j-1} m_i$ for $1 \leq j \leq k$-1. We can write each $Y \in [0, \prod_{i=0}^{k-1} m_i)$ as $Y = \sum_{j=0}^{k-1} y_j P_j$ with $y_j \in [0,m_j)$. We call $(y_0,...y_{k-1}$ the Mixed-Radix Representation (MRR) of Y. In a fixed radix representation, all of the bases $m_i$ are equal. For example, if all bases are equal to 10, we have the conventional base-10 representation. Both fixed and mixed-radix number systems are positional, so that the most significant non-zero digit determines for a larger part the magnitude of the number, and may be used to approximate the operation result. Below we refer both to fixed and mixed radix systems as mixed.

If a mixed radix number system is used, there are several ways to do it. For example, the input $Y$ may be received in an RNS format only. In this case, the RNS format may be converted to MR to approximate $Y$. For example, the input $Y$ may be received in an MR format only. In this case, computations may use MR, but one may also convert the MR number to RNS. In this case, the RNS representation is used for computing with $Y$, whereas the MR format is used to approximate $Y$. The number may also be received in MR and in RNS format, in this case no conversion is needed.

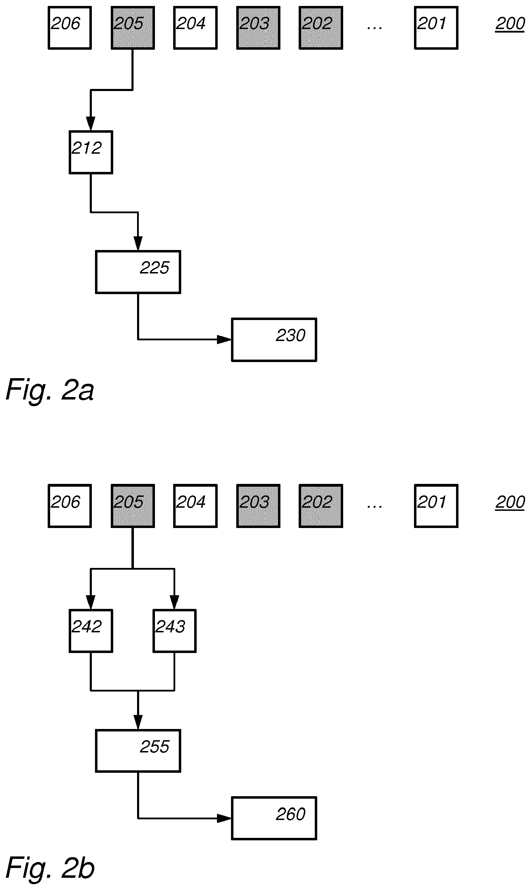

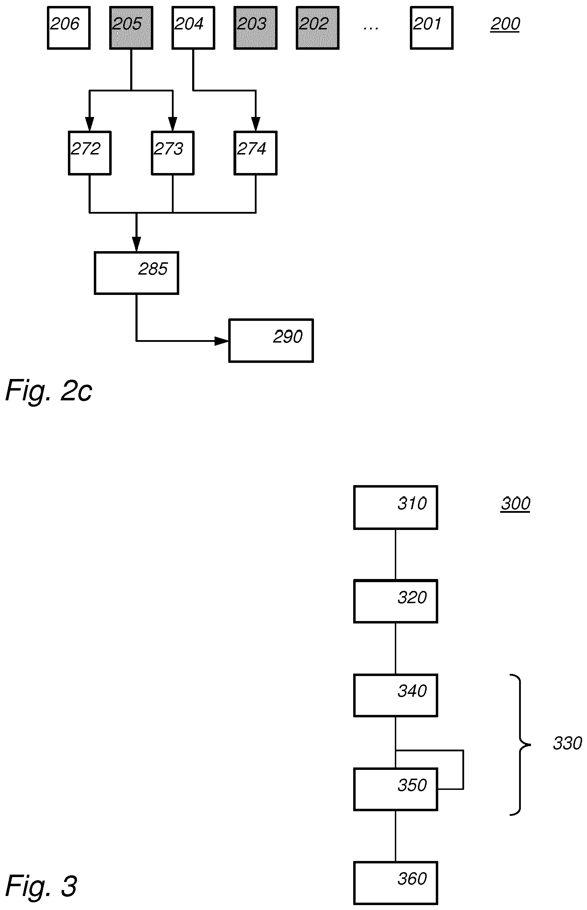

In an embodiment, the initial approximation table may be configured to receive as input at least the position in the sequence of the most-significant non-zero digit of the first input $Y$. Fig. 2a schematically shows an example of an embodiment of obtaining an initial approximation of an operation result from a first input 200. In Fig. 2a, the first input is represented in a mixed radix form. Shown are the digits 201-206. In Figs. 2a, 2b and 2c zero-valued digits are indicated with a white background, and non-zero digits are indicated with a grey background. The least significant digits are shown on the right. To the left increasingly more significant digits are shown, with digit 206 being the most significant digit. For example, the reference numerals 201-206 may correspond to the digits $(y_0,...,y_{k-1})$. The most significant non-zero digit in input 200 is digit 205. In Fig. 2a, only the position in the sequence of the most-significant non-zero digit of the first input ($Y$) is used as input to an initial approximation table 225. A straightforward way to encode the positions of the digits in the sequence is to number them sequentially, e.g., as the indices in digits $(y_0,...,y_{k-1})$. This is not necessary though, any assignment that assigns a unique integer to each of the digits would do; e.g., any encoding of the index may be used.

In Fig. 2b both the position of the most significant digit is used as input to an initial approximation table but also the value of that digit. Finally, Fig. 2c shows yet a further embodiment, in which also a next most-significant non-zero digit is taken into account. For example, if the highest non-zero digit is $y_j$, then the inputs may be $j, y_j, y_{j-1}$.

To generate the table, its input may be taken as an approximation to the integer $Y$. For example, one may take as approximations $g(P_j)$, $g(y_j P_j)$, and $g(y_j P_j + y_{j-1} P_{j-1})$ for Figs. 2a, 2b, and 2c respectively. In these examples, $Y$ is lower bounded, and if $g$ is an increasing/decreasing function, then these are each lower/upper bounds. One may also construct approximations to Y from above, or from the middle, etc. The approximations that are possible in the embodiments based on Figs. 2a, 2b and 2c are increasingly accurate. Yet also require increasingly larger tables.

Finding the most-significant non-zero digit can be done in constant time. For example, by scanning from the until the least significant digit, even if the most-significant non-zero digit has already been found. For example, for the $k$ digits $(y_0,...,y_{k-1})$, with $y_{k-1}$ being the most significant one, may perform the following algorithm:

```
t:=k;
for j:=k-1 downto 0
do if ((t=k) AND (x[j]<>0)) then t:=j;
```

After execution of this algorithm, t is the position of the most-significant digit.

An if-statement, such as in the last line, may be done in constant time, using a conditional assignment operation, or by adding an else branch with a dummy assignment.

Protected arithmetic, such as constant time arithmetic, for other operations, e.g., addition, subtraction and multiplication is conveniently performed by representing the integers in the so-called Residue number system (RNS). In the RNS, a number $Y$ would be represented as its residue modulo a number of moduli. For example, using the same notation as above, $Y$ could be represented as a sequence ($Y \bmod m_i$). However, to use the above approximation a mixed radix representation is used. In this case, calculator 100 may comprise a conversion unit 160 configured to compute a conversion of the first input from a residue number system to the fixed or mixed radix system. This transformation can be done conveniently if the bases of the mixed radix representation and the representation of the RNS are the same, e.g., both are integers $m_i$. The computation that is done afterwards, e.g., in iteration unit 130 or correction unit 150 may be done in the RNS or in MR representation as is desired. In case the final operation result is computed in MR representation, conversion unit 160 may be configured to compute a conversion of the arithmetic operation result from the fixed or mixed radix system to a residue number system.

Instead of using a table based approximation, the initial approximation may also be obtained in different ways. For example, the initial approximation may itself be based on iterated approximation with a fixed number of iterations. However, here there is no requirement that the final result of the iteration is the actual operation result. This means that, e.g., fewer rounds and/or quickly, e.g., exponentially, increasing approximations may be used. For example, to approximate $\lceil M/Y \rceil$, with $1 \leq Y < M$ one may use the following algorithm:

```
a:=1, b:=2, t:=0;
for j:=0 upto ceil(log_2(M)) do begin
        if ((t=0) AND (b*Y≥M)) then t=a
        a=b, b=2a
end
return t
```

Clearly, upon termination, we have that tY < M≤2tY, in other words, $\frac{M}{2Y} \leq t < \frac{M}{Y}$ so that $t$ can be used as an initial approximation. The if statement can be implemented as a conditional assignment, or with an additional dummy else clause, etc.

The combination of the accuracy of the initial approximation and the number of approximating iterations that follows it should be such that the correct operation result is produced. In many cases this can be verified experimentally, even for relative large word sizes, e.g., relatively large for the area of say white-box computations. For example, even for 32-bit inputs the required number of iterations can be computed experimentally by simply trying all inputs. In fact, the inventor has performed such experiments to validate the results, which he could also obtain theoretically, see below. Note that the underlying RNS representation, even, for a 32 bit number may use multiple moduli which are much smaller, e.g., 8 bits.

In an embodiment, the initial approximation is taken such that it is close to the operation result in the expectation that this will lead to fewer iterations. For example, one may select the initial approximation, e.g., the initial approximation table, such that an initial approximation $x_0$ lies in a first range $[\alpha_0 x, \alpha_1 x]$, wherein $x$ is the true operation result. The first parameter $\alpha_0$ is at most 1. The second parameter $\alpha_1$ is at least 1. As the initial approximation will not be exact for each input, we have that the first parameter is less than the second parameter.

Interestingly, the first and second parameters are predetermined. That is regardless of the actual value of $Y$ or of the operation result $x$, the first and second parameters can be chosen uniformly for the entire table. For example, $\alpha_0$ may be between 0.1 and 1 (inclusive); For example, $\alpha_1$ may be between 10 and 1 (inclusive). For example, $\alpha_0$ may be between 0.5 and 1 (inclusive); For example, $\alpha_1$ may be between 2 and 1 (inclusive). In a worked embodiment presented below the first parameter is ½ and the second parameter is 1.

The initial approximation may be more accurate for some inputs than for others. For example, difficult inputs may be given a better approximation. This may be achieved by having a further first parameter $\alpha'_0$ and a further second

parameter $\alpha'_1$ so that the initial approximation lies in the range $[\alpha_0 x, \alpha_1 x]$, whenever the input parameter lies in a difficult range, e.g., below a threshold. In a worked embodiment presented below the further first parameter is 1 and the further second parameter is 1; so that in this case, the further first parameter is larger than the first parameter. In an embodiment, two tables may be used: a first table with less precision which used for most inputs, and a second table with higher inputs which is used for selected inputs, e.g., inputs where higher precision is needed. To keep constant time one may evaluate both tables for each input, e.g., but evaluate one with a dummy input and the other with real input, etc.

Calculator 100 comprises an iteration unit 130 configured to perform an iterated approximation to obtain a series of approximations of the operation result. This is done by repeatedly applying an integer function ($f$). To this end, iteration unit 130 may comprise an integer function unit 135. Integer function unit 135 is configured to apply the integer function $f$. Note that the integer function $f$ may depend on first input $Y$; for example, integer function $f$ may be defined using one or more parameters which are assigned on the basis of input $Y$ when the approximation is executed.

The approximation that is used may be the so-called Fixed Point Iteration Method. In fixed point iteration methods, a function $f$ is iterated to find a fixed point of the function, e.g., a value $x$ such that $f(x) = x$. Since in this case the Fixed-Point Iteration Method is discretized, e.g., an integer version is used, it may happen that an exact fixed point does not exist, and that the iteration may not arrive exactly at the desired operation result. This need not be a problem as further explained herein.

Iteration unit 130 is configured to, in a first iteration, apply the integer function $f$ to the initial approximation. In this way, the first approximation in the series is obtained. We may denote this as $f(x_0) = x_1$. In this formula, $x_0$ is the initial approximation and $x_1$ is the first approximation in the series. In subsequent iterations, iteration unit 130 obtains the next approximations in the series by applying the integer function ($f$) to the approximation in the series previously computed by the integer function. That is the iteration unit 130 computes, $f(x_1) = x_2$, then $f(x_2) = x_2$ to build a series of approximations $x_1, x_2, x_3, \ldots, x_A$.

In an embodiment, only the latest computed element of the series is kept. A new computed approximation replacing the previous computation in storage. In an embodiment, a number of approximations are kept but not all, e.g., the last 2.

The number of iterations, and thus the number of approximations in the series, is fixed beforehand. It is the same for each value of the input, and thus independent therefrom. The integer function $f$ and the number of iterations are chosen such that the approximations converge to at least within a threshold of the operation result. For example, the threshold may be 1.

Many functions are known from iterated fixed point methods to approximate arithmetic operations. For example, one may require that the derivative of the integer function $f$ in absolute value is less than 1 around the fixed point, e.g., in a neighborhood around the fixed point, e.g., in a neighborhood in which the initial approximation lies. These conditions are not strictly necessary for convergence though. For example, a fixed-point approximation function which converges to a division is the function $f(x) = \frac{x(2M - Yx)}{M}$, and rounded down or up (e.g., a ceil or floor operation) to approximate the division $\frac{M}{Y}$. Another example is the function $f(x) = 1/2(\frac{a}{x} + x)$, also round down or up, to approximate the square root $\sqrt{a}$. Note, an important difference between these two examples. The first example, only uses the operations: multiplication, addition, subtraction and division by a constant. All of these operations can easily be performed in constant time, e.g., using an RNS number system. The division by a constant can also be so performed, especially if the constant is chosen to be convenient with respect to the RNS bases. For example, one may choose the constant as a product of some or all of the RNS bases. The second example also includes the operation division by a non-constant. Using that function may thus require constant-time implementation of the division, e.g., a constant time algorithm as set out below.

Calculator 100 may comprise a correction unit 150. Correction unit 150 is not always necessary, depending on the chosen integer function. A problem that can occur when using integer functions for approximation is that when the target, e.g., the operation result is reached, the approximations in the series begin to cycle around the true operation result. For example, this may happen if the fixed point $x = f(x)$ of the integer function is not itself an integer. As a result, any integer $x'$ would either be too low or too high, which may have the result that the iteration does not settle on a single value. For example, the iteration may cycle between the values $\lfloor x \rfloor$ and $\lceil x \rceil$. Correction unit 150 is configured to correct for this cycling behavior. For example, correction unit 150 may select a largest or smallest integer function result from two or more final rounds of the iteration, e.g., depending if the arithmetic operation is related to a round down or rounded up version of the integer function. Alternatively, the correction unit may take the final approximation value and test the value to verify if it is a correct result of the arithmetic operation, e.g., by applying an inverse of the arithmetic operation. For example, in the case of a division operation an approximation can be tested by multiplication; for example, in the case of a square root operation an approximation can be tested by squaring the number. Note that multiplication and squaring are both easy operations to perform in constant time. For example, the correction result may verify that the final approximation result was too small, and add one to the final approximation result. Such conditional addition may be performed in constant time.

A pointed out above, embodiments provide a substantially constant time operation for division, where the divisor *Y* is not constant but the dividend is. For example, the dividend may be some large number *M*. For example, in the context of base-10 computation the dividend may be a power by 10, or for base-2 computation a power of 2, etc. For example, *M* may be 2 to the power of 32, 64, 128, etc. The power of 2 may even as large as 1024, 2048, 4096, and the like. Such large number are used, e.g., in RSA cryptography. For example, in an embodiment the arithmetic operation may be integer division, e.g., ⌈*M/Y*⌉, that is, the upward rounded quotient. For example, if numbers are represented in a fixed-radix representation, then dividing by a power of the fixed radix is easy. If a number is represented in RNS, dividing by a product of moduli is relatively easy.

Interestingly, once a constant time implementation of division of a constant dividend, e.g., *M*, by a non-constant divisor, e.g., *Y* is obtained, a constant time implementation of general division can be constructed from it. For example, consider an input interface which is configured to receive an integer first input *Y*, and a second integer input *X*. The first and second inputs are integers. The goal is to obtain the quotient ⌊*X/Y*⌋. This can be done using the formula $Q = \left\lfloor \frac{X\lceil M/Y \rceil}{M} \right\rfloor$, within the range $1 \le X, Y \le M$. The value Q is either equal to ⌊*X/Y*⌋ or to ⌊*X/Y*⌋ + 1, so we may compute Q·Y, and determine if it is smaller than X or not. We may use the following algorithm:

Compute $Q = \left\lfloor \frac{X\lceil M/Y \rceil}{M} \right\rfloor$
Compute T=QY
If X<T then Q=Q-1
return Q

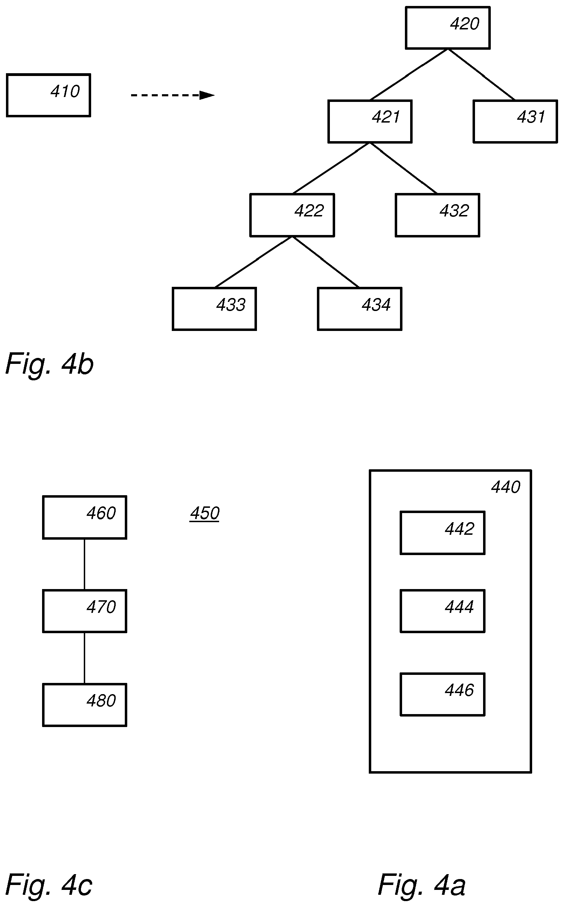

Fig. 4a schematically shows an example of an embodiment of a compilation device 440. Device 440 comprises an input interface 442 and a processor circuit, e.g., an input interface and processor circuit of the type used in Fig. 1. Compiler device 440 may also comprise an output interface. Fig. 4a shows an input/output interface at reference numeral 442, though they could be split. The output interface may even be absent, e.g., if the generated computer code is intended to run at device 440. Fig. 4a does not separately show the processor circuit. As in Fig. 1, the processor circuit may implement one or more of the units shown in the figure.

The input interface may be configured to receive an arithmetic expression. In an embodiment, the input interface may be configured to receive the arithmetic expression as part of a computer program written in some general-purpose computer programming language, e.g., C, C#, C++, Pascal, Java, and the like. The latter is not necessary though, e.g., the compiler device 440 may be specialized in compiling arithmetic operations, and, e.g., called by some other more general compiling device.

Compiling device 440 comprises a parser 444. Parser 444 may be configured to parse said programming language, but at least, parser 444 is configured to parse the arithmetic expression obtaining a list of primitive arithmetic operators. Primitive arithmetic operators are those for which compiling device 440 can directly generate code, and for which thus no further parsing into more primitive operators is necessary. Typical primitive arithmetic operators include addition, subtraction, multiplication and division. There may be more primitive arithmetic operators. The arithmetic expression may be an integer expression; the primitive arithmetic operators may be integer operators. A primitive arithmetic operator may be arranged to receive one or more inputs, e.g. integer inputs, and produce an integer output.

Fig. 4b schematically illustrates an example of parsing an arithmetic expression 410. Parsing is shown for the expression $\left(\frac{XY}{W} + Z\right)$, i.e., expression 410. This expression may be written, e.g., in a program as (X*Y/W+Z), or ((X*Y)/W)+Z, etc. Instead of infix, also postfix, etc., notation may be used. The parsing used in Fig. 4b produces a tree data structure representing the arithmetic expression and including the list of primitive arithmetic operators. As is known in the art of compiler building there are other ways to represent a list of primitive arithmetic operators and a parsed arithmetic expression, e.g., as a table, etc. The parsing may use an operator precedence parser, e.g., a bottom-up parser that interprets an operator-precedence grammar in according to which the arithmetic expressions are written, e.g., the shunting-yard algorithm.

The tree in Fig. 4b includes leaves that represent the inputs of the arithmetic expression. In this case leaves 433, 434, 432, 431 represent the inputs X, Y, W, and Z respectively. The tree also includes nodes that represent the primitive arithmetic operators. In this case, nodes 422, 421 and 420 represent the operators multiplication, division, addition respectively. For example, these constants may be hard-wired in a program, or stored variables and the like. Their values may change, e.g., outside of the arithmetic expression.

The nodes take as input either a leave, which is regarded a constant, or the result of a further primitive arithmetic expressions. For example, multiplication node 422 takes as input two values X and Y. For example, division node 421 takes as input the result of multiplication 422, and a constant W.

Compiler device 440 further comprises a code generator 446. Code generator takes the parsed arithmetic expression including the list of primitive operators and generates code that implements it. Code generator 446 is configured to generate computer code implementing the list of primitive arithmetic operators. The computer code has reduced time dependence on said inputs of the primitive arithmetic operators, wherein at least part of the generated computer code implements a calculator according to any one of the preceding claims.

For example, the code generator may be arranged to generate code in which the constants and operator results are represented in a memory in RNS format, possibly encoded RNS. The code generator may be configured to generate a constant time algorithm, for addition, subtraction and multiplication using the RNS representation. Such an implementation is straightforward in the RNS format. For example, given two operands represented by RNS remainders $x_i$ and $y_i$ (with $i$ running over the number of bases), their addition, subtraction and multiplication may be computed as $x_i + y_i$, as $x_i - y_i$ and as $x_i.y_i$ respectively. To implement a division the code generator may generate a code that implements a calculator, e.g., as in Fig. 1. The same could be done for other primitive operators, if any, that need a constant time implementation.

In the various embodiments of calculator 100 or compiler device 440, the input interface may be selected from various alternatives. For example, the input interface may be a network interface to a local or wide area network, e.g., the Internet, a storage interface to an internal or external data storage, a keyboard, an application interface (API), etc.

The calculator may be implemented using white-box technology. The compiler device 440 may be configured to generate white-box protected code. For example, intermediate results, in particular the approximations, the initial approximation and the arithmetic operation result, are represented in the calculator in an encoded form. For example, the encodings may be random bijections defined for the intermediate results. An encoding may include, e.g., a salt, also referred to as a state. Operations on encoded values may be performed using an encoded table-network. In particular, the integer function (f) being implemented as an encoded table-network.

The input Y can also be in encoded form. In a typical example, input Y is represented in RNS, and each of the elements of RNS representation is encoded independently of other elements.

The calculator device 100 or compiler device 440 may have a user interface, which may include well-known elements such as one or more buttons, a keyboard, display, touch screen, etc. The user interface may be arranged for accommodating user interaction for performing a division action, e.g., as part of a cryptographic operation, or to initiate a compiling action, etc.

Storage 140 may be implemented as an electronic memory, say a flash memory, or magnetic memory, say hard disk or the like. Storage 140 may comprise multiple discrete memories together making up storage 140. Storage 140 may also be a temporary memory, say a RAM. Storage 140 may be configured to store state data of the arithmetic operation calculation. Compiler device 440 may comprise a storage as well, e.g., to hold intermediate compiling result, compiling software, received data and the like.

Typically, the device 100 and compiler device 440 comprises a microprocessor (not separately shown in Fig. 1) which executes appropriate software stored at the device 100 and compiler device 440; for example, that software may have been downloaded and/or stored in a corresponding memory, e.g., a volatile memory such as RAM or a non-volatile memory such as Flash (not separately shown in Fig. 1). Alternatively, the devices 100 and 440 may, in whole or in part, be implemented in programmable logic, e.g., as field-programmable gate array (FPGA). Device 100 and 440 may be implemented, in whole or in part, as a so-called application-specific integrated circuit (ASIC), i.e. an integrated circuit (IC) customized for their particular use. For example, the circuits may be implemented in CMOS, e.g., using a hardware description language such as Verilog, VHDL etc.

In an embodiment, calculator 100 comprises an input/output interface circuit, an initial approximation circuit, an iteration circuit, an integer function circuit, a storage circuit, a correction circuit, and a conversion circuit; some of which are optional, e.g., the conversion or correction circuit. Compiler device 440 may comprise an input/output circuit, a parser circuit, and a generator circuit. The circuits implement the corresponding units described herein. The device 100 may comprise additional circuits, e.g., a circuit configured for a cryptographic protocol. For example, calculator 100 may be a part in a larger device. The circuits may be a processor circuit and storage circuit, the processor circuit executing instructions represented electronically in the storage circuits. The circuits may also be, FPGA, ASIC or the like.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

Fig. 3 schematically shows an example of an embodiment of a calculation method 300. Calculating method 300 has a reduced time dependence on the input. Calculating method 300 computes an integer arithmetic operation g. Calculating method 300 comprises

- receiving 310 an integer first input *Y*, the calculating method being configured to compute the result of applying the integer arithmetic operation to at least the first input *Y*,
- obtaining 320 an initial approximation of the operation result *g*(*Y*) from the first input,
- performing 330 an iterated approximation to obtain a series of approximations of the operation result, the iterated approximation comprising
- in a first iteration, applying 340 an integer function *f* to the initial approximation obtaining an approximation in the series,
- in subsequent iterations, obtaining 350 a next approximation in the series by applying the integer function *f* to the approximation in the series previously computed by the integer function, the integer function converging to at least within a threshold of the operation result, wherein the iteration is applied a predetermined number of times which is independent from the received first input *Y*,
- obtaining 360 the operation result from an approximation in the series.

Fig. 4c schematically shows an example of an embodiment of a compiling method 450. Compiling method 440 comprises

- receiving (460) an arithmetic expression,
- parsing (470) the arithmetic expression obtaining a list of primitive arithmetic operators, a primitive arithmetic operator taking as input one or more constants and/or results of further primitive arithmetic expressions, and
- generating (480) computer code implementing the list of primitive arithmetic operators, wherein the computer code has reduced time dependence on said inputs of the primitive arithmetic operators, wherein at least part of the generated computer code implements a calculating method according to an embodiment.

Many different ways of executing method 300 and 450 are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, a given step may not have finished completely before a next step is started.

A method according to the invention may be executed using software, which comprises instructions for causing a processor system to perform method 300 or 450. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. A method according to the invention may be executed using a bitstream arranged to configure programmable logic, e.g., a field-programmable gate array (FPGA), to perform the method.

It will be appreciated that the invention also extends to computer programs, particularly computer programs on or in a carrier, adapted for putting the invention into practice. The program may be in the form of source code, object code, a code intermediate source, and object code such as partially compiled form, or in any other form suitable for use in the implementation of the method according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

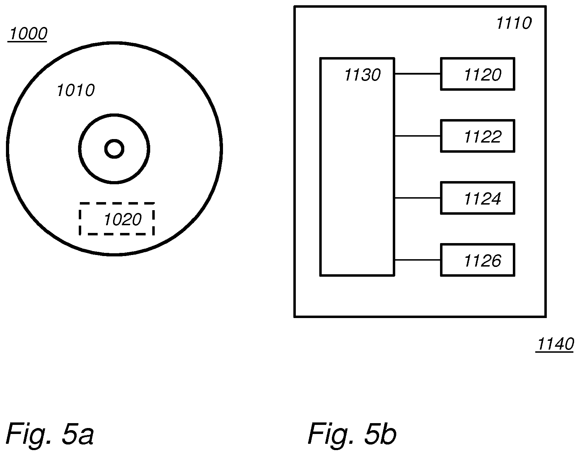

Fig. 5a shows a computer readable medium 1000 having a writable part 1010 comprising a computer program 1020, the computer program 1020 comprising instructions for causing a processor system to perform a calculation or compiling method, according to an embodiment. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said calculation or compiling method.

Fig. 5b shows in a schematic representation of a processor system 1140 according to an embodiment of a calculator or compiler device. The processor system comprises one or more integrated circuits 1110. The architecture of the one or more integrated circuits 1110 is schematically shown in Fig. 5b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, the calculator device may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It should be noted that the above-mentioned embodiments illustrate rather than limit the invention, and that those skilled in the art will be able to design many alternative embodiments.

Below a detailed analysis is provided of some particular embodiments for performing protected arithmetic. We use the following notation: for real-valued $x$, we denote with $\lceil x \rceil$ the integer obtained by rounding $x$ upwards, and with $\lfloor x \rfloor$ integer obtained by rounding $x$ downwards. For example, $\lfloor 3.1 \rfloor = 3, \lceil 3.1 \rceil = 4$, and $\lceil 3 \rceil = \lfloor 3 \rfloor = 3$. Moreover, we use the well-known interval notation: if $a \leq b$, then $[a,b) = \{x \in R | a \leq x < b\}$.

Let $X, Y, M$ be positive integers such that $X, Y \in [1, M)$. We wish to compute the integer quotient $Q$ of $X$ and $Y$, that is, we wish to compute $\lfloor X/Y \rfloor$. This may be done in two steps: first compute $\left\lfloor \frac{M}{Y} \right\rfloor$, and subsequently determine

$$Z = \left\lfloor \frac{X \lfloor \frac{M}{Y} \rfloor}{M} \right\rfloor.$$ We have that $\left\lfloor \frac{X}{Y} \right\rfloor$ is either $Z$ or $Z + 1$. In order to apply this method, we need to be able to compute $\lfloor u/M \rfloor$, say for integers $u \in [0, M^2)$, and to compute $\left\lfloor \frac{M}{Y} \right\rfloor$. This may be done by using a discretized approximation scheme, e.g., the Newton-Raphson scheme, employing integer division by $M$ as a subroutine. In a variation rounding upwards is used instead of rounding downwards, which turns out to work more conveniently. One of the reasons is that in both variations, the iterands are monotonically increasing, and rounding upwards thus is expected to yield a faster convergence. Another reason is that the analysis of the scheme with rounding upwards is simpler and yields somewhat tighter bounds.

We wish to obtain an algorithm for which the time consumed depends less on the input $X$ and $Y$, e.g., an algorithm for which the number of operations required to compute $\left\lfloor \frac{X}{Y} \right\rfloor$ does not depend on $X$ and $Y$. For example, most division algorithms comprise iterations that depend on the input, it is desired that the number of iterations does not.

In a cryptographic context, constant-time implementations have the advantage that they avoid timing attacks. Moreover, for providing a white-box implementation of an algorithm, it is advantageous that this algorithm does not contain a loop with a data-dependent number of iterations. The reason is that in a white-box implementation, internal variables are encoded. After execution of a loop, the encoding of variables must be known in order to correctly continue to the next steps of the algorithm. So either the encoding of variables remains constant during execution of the loop (resulting in possibly reduced security), or it must be possible to derive the encoding after execution of the loop, e.g. by a counter, which complicates the program and may require a re-encoding table, which also introduces a security risk.

The correctness of the following algorithm can be shown.

**Algorithm** DIVISON

**Input** Integer $Y$ with $1 \leq Y \leq M$; integer $x_0(Y)$.

**Output** $\left\lceil \dfrac{M}{Y} \right\rceil$

**Require** There exists $m_0$ such that $x_0(Y) = \left\lceil \dfrac{M}{Y} \right\rceil$ if $Y < m_0$, and $\dfrac{M}{2Y} \leq x_0(Y) \leq \left\lceil \dfrac{M}{Y} \right\rceil$ if $Y \geq m_0$; and $j$ is such that $2^{2^j} \geq M/m_0$

**begin** $x \leftarrow x_0(Y)$;

**for** $i := 1$ **to** $j$ **do** $x \leftarrow \left\lceil \dfrac{x(2M - Yx)}{M} \right\rceil$;

$u \leftarrow \left\lceil \dfrac{x(2M - Yx)}{M} \right\rceil$;

**if** $u = x + 1$ **then** return($u$) **else** return($x$).

Alternatively, instead of the final computation of u and comparison with x+1, the following can be used: if Yx $\geq$ M then return (x) else return ($x$ + 1). This is advantageous if comparing $Yx$ with $M$ is easier than computing u (which in fact is usually the case, so using the inequality is preferred). The constant $m_0$ is optional, e.g., it may be set to 1.

In order to analyze DIVISON, we denote $M/Y$ by $c$. For each positive $x$, let

$$f(x) = x(2 - c^{-1}x) = x + c^{-1}x(c - x), \text{ and } \phi(x) = \lceil f(x) \rceil. \quad (1)$$

We have $f(x) \geq x$ if and only if $x \leq c$. Moreover, $f$ attains its maximum $c$ in $x=c$, and is monotonically increasing on $[0,c)$. As a consequence, $\phi(x) \leq \lceil c \rceil$ for all integers $x$ (2). For any positive integer $x < c$, we have $\phi(x) > \lceil x \rceil = x$, and so $\phi(x) \geq x+1$, (3) and if $0 \leq x \leq y \leq c$, then $\phi(x) \leq \phi(y)$

**Proposition 1** *We have that* $\phi(\lfloor c \rfloor) = \lceil c \rceil$ *and* $\phi(\lceil c \rceil) \in \{\lfloor c \rfloor, \lceil c \rceil\}$.

**Proof** The proposition is obvious if $c$ is an integer, so let us assume that it is not.

As $\lfloor c \rfloor < c$, Equation 3 implies that $\phi(\lfloor c \rfloor) \geq \lfloor c \rfloor + 1 = \lceil c \rceil$. Combining this with (2), we infer that $\phi(\lfloor c \rfloor) = \lceil c \rceil$. It is clear that $f(\lceil c \rceil) = \lceil c \rceil - c^{-1} \lceil c \rceil (\lceil c \rceil - c) > \lceil c \rceil - c^{-1}(c+1) \geq \lceil c \rceil - 2 = \lfloor c \rfloor - 1$ and so $\phi(\lceil c \rceil) \geq \lfloor c \rfloor$. As $\phi(\lceil c \rceil) \leq \lceil c \rceil$, the second part of the proposition follows.

We remark that both cases for $\phi(\lceil c \rceil)$ can occur. For example, $\phi(\lceil c \rceil) = \lfloor c \rfloor$ if $c = 71/10$ and $\phi(\lceil c \rceil) = \lceil c \rceil$ if $c=5/2$.

Let $x_0$ be an integer satisfying $x_0 \leq \lceil c \rceil$. For $i \geq 1$, let $x_i := \phi(x_{i-1})$.

According to (3), if $x_i < c$, then $x_{i+1} \geq x_i + 1$, so initially the iterates are monotonically increasing. Combining (2) and Proposition 1, we infer that eventually the iterates either remain static at $\lceil c \rceil$, or oscillate between $\lfloor c \rfloor$ and $\lceil c \rceil$. The following proposition show an explicit value for $j$ for which it can be assured that $x_j \geq \lfloor c \rfloor$ that is, that the static or oscillating behavior of the iterates has started.

**Proposition 2** *If* $\left(1 - \dfrac{x_0}{c}\right)^{2^j} < \dfrac{1}{c}$, *then* $x_j \geq \lfloor c \rfloor$.

**Proof** We define $y_0, y_1, \ldots$ as $y_0 := x_0$ and $y_i := f(y_{i-1})$, Suppose $j$ is such that $x_j \leq \lfloor c \rfloor - 1$. The claim implies that $x_i \leq \lfloor c \rfloor - 1$ for all $i \leq j$. By induction, we show that $y_i \leq x_i$ for all $i \leq j$. Indeed, this is true for $i=0$. If $0 \leq i \leq j-1$, then

$$y_{i+1} = f(y_i) \leq \lceil f(y_i) \rceil = \phi(y_i) \leq \phi(x_i) = x_{i+1},$$

where the second inequality follows from the induction hypothesis, the fact that $x_i < c$, and the monotonicity of $\phi$ on $[1,c)$, see (4). So indeed, $y_i \leq x_i$ for $1 \leq i \leq j$, and more specifically, $y_j \leq x_j$. As $x_j \leq \lfloor c \rfloor - 1$, we thus have that $y_j \leq \lfloor c \rfloor - 1$. As a consequence, *if $y_j > \lfloor c \rfloor - 1$, then $x_j \geq \lfloor c \rfloor$.*

For convenience, we write $y_j = c(1-\varepsilon_j)$. Re-expressing the above in term of $\varepsilon_j$, we infer that $\varepsilon_j < \dfrac{c - \lfloor c \rfloor + 1}{c}$, *then $x_j \geq \lfloor c \rfloor$.*

So surely if $\varepsilon_j < \dfrac{1}{c}$ then $x_j \geq \lfloor c \rfloor$. It is easy to see that $\varepsilon_{i+1} = \varepsilon_i^2$ for all $i$, and so $\varepsilon_j = \varepsilon_0^{2^j} = (1 - \dfrac{x_0}{c})^{2^j}$.

**Proposition 3** *DIVISON returns* $\left\lceil \dfrac{M}{Y} \right\rceil$.

**Proof** For $Y < m_0$, the proposition follows from the actual value of $x_0(Y)$ and Proposition 1. For $Y > m_0$, it follows from the condition on $x_0(Y)$ and Proposition 2 that after $j$ iterations, $x$ equals $\lfloor c \rfloor$ or $\lceil c \rceil$. W

**Remark** We have verified Proposition 3 for $M = 2^{32}$ where we took $x_0(1) = M$ (so $m_0 = 2$) and $x_0(Y) = \left\lceil \dfrac{M}{2Y} \right\rceil$ for $Y > 1$. The maximum number of iterations required to obtain an iterate larger than or equal to $\lfloor M/Y \rfloor$ indeed equals 5.

**Obtaining a value close to $M/Y$**

The correct operation of DIVISON requires that for each $Y$, we find an integer $x_0(Y)$ that is close to $\dfrac{M}{Y}$. As noted above this can be done using a coarser approximation scheme based on doubling. Upon termination of that scheme, we have that $aY < M \leq 2aY$, so $a$ can be used as starting value $x_0(Y)$ in DIVISON. The number of iterations of the algorithm equals $\log_2(a) < \log_2 \dfrac{M}{Y}$. This number can be relatively high, e.g., if $M = 2^{32}$ and $Y = 2^8$, the number of iterations equals 24, as compared to at most 5 iterations for DIVISON. The algorithm can be made constant-time by adding dummy rounds of operations as soon as $b \cdot Y \geq M$. A disadvantage of the algorithm is the need to compare $b \cdot Y$ with $M$, which can be relatively complicated (although possible) if the numbers are represented in RNS.

**Using a Mixed Radix Representation**

In this section, we describe another manner for finding an estimate for $\dfrac{M}{Y}$. As explained below, it uses the Mixed Radix Representation of $Y$ and a table.

Let $m_0, m_1, \ldots, m_{k-1}$ be integers larger than or equal to two. Let $P_0 : 1$, and $P_j = \prod_{i=0}^{j-1} m_i$ for $1 \leq j \leq k-1$. We can write $Y \in [0, \prod_{j=0}^{k-1} m_j)$ as

$$Y = \sum_{j=0}^{k-1} y_j P_j \ \ with \ \ y_j \in [0, m_j).$$

We call $(y_0,\ldots,y_{k-1})$ the *Mixed-Radix Representation* (MRR) of *Y*.

In the proposed method, we pre-compute a table *T* such that

$$T(j, y) = \begin{cases} \lceil M/y \rceil & for \ \ j = 0 \ and \ 1 \le y \le m_0 - 1, \\ \lceil M/P_t(1+y_t) \rceil & for \ 1 \le j \le k-1 \ and \ 0 \le y \le m_j - 1. \end{cases}$$

Let $Y \in [1, \prod_{j=0}^{k-1} m_j)$ have MRR $(y_0,\ldots,y_{k-1})$. Let *t* be the largest index *j* for which $y_j \neq 0$ and define

$$x_0(Y) = T(t, y_t).$$

If *t* = 0, that is, if $1 \le Y \le m_0 - 1$, then $Y = y_0$, and

$$x_0(Y) = t(0, y_0) = \lceil \frac{M}{y_0} \rceil = \lceil \frac{M}{Y} \rceil .$$

If $t \ge 1$, we have that $y_t P_t \le Y < (y_t + 1) P_t$, and so

$$x_0(Y) \ge \frac{M}{P_t(1+y_t)} = \frac{M}{P_t y_t} \frac{y_t}{1+y_t} \ge \frac{M}{Y} \frac{y_t}{1+y_t} \ge \frac{M}{Y} \frac{1}{2}.$$

So indeed, this method gives a starting value $x_0(Y)$ satisfying the requirements of DIVISON. It requires computation of the MRR of *Y*, and a table for producing an estimate for $\lceil \frac{M}{Y} \rceil$ from the position and value of the most significant digit in the MRR of *Y*.

**Remark** A more accurate estimate of *M/Y* can be obtained if we use a table that uses the two most significant digits of the MRR of *Y* as input (possibly only for relatively small values of *Y*). This more accurate estimate may further reduce the number of required steps in p DIVISION. The table size, however, increases significantly. Speed/time tradeoffs can be done on a case-by-case basis.

**Division with remainder**

Let $1 \le X, Y < M$. We wish to obtain $\lfloor X/Y \rfloor$. Suppose that we have obtained $\lceil \frac{M}{Y} \rceil$. We write

$$Q := \lfloor \frac{X \lceil \frac{M}{Y} \rceil}{M} \rfloor.$$

We have that

$$Q \geq \left\lfloor \frac{X \cdot \frac{M}{Y}}{M} \right\rfloor = \left\lfloor \frac{X}{Y} \right\rfloor, \text{ and } Q \leq \left\lfloor \frac{X \cdot (\frac{M}{Y} + 1)}{M} \right\rfloor = \left\lfloor \frac{X}{Y} + \frac{X}{M} \right\rfloor \leq \left\lfloor \frac{X}{Y} + 1 \right\rfloor = \left\lfloor \frac{X}{Y} \right\rfloor + 1.$$

As a consequence, $\left\lfloor \frac{X}{Y} \right\rfloor \in \{Q, Q-1\}$' and so

$$\lfloor X/Y \rfloor = \begin{cases} Q & \text{if } X - QY \geq 0 \\ Q-1 & \text{if } X - QY < 0 \end{cases}$$

So, for obtaining $\left\lfloor \frac{X}{Y} \right\rfloor$ we could compute $Q \cdot Y$, and determine if it is smaller than $X$ or not. From an implementation perspective, it is better to check if $X - Q \geq Q(Y-1)$ than it is to check if $X \geq QY$. The reason is that both $X-Q$ and $Q(Y-1)$ are integers in the interval $[0, M)$, so that comparison can be performed in RNS, while it can happen that $QY \geq M$.

**Rounding upwards versus rounding downwards**

In the computation of $Q$, we compute $Z/M$ rounded downwards, while in Fixed-Step DIVISON, we compute $Z/M$ rounded upwards. It is not difficult to relate the rounding upwards and rounding downwards function. Suppose that we have implemented, for fixed $M$, the function $z \mapsto \left\lfloor \frac{z}{M} \right\rfloor$ · There are two ways to implement $z \mapsto \left\lceil \frac{z}{M} \right\rceil$ ·

First, suppose it is easy to check if $z$ is a multiple of $M$ or not. If we find that $Z$ is a multiple of $M$, then also $\left\lfloor \frac{z}{M} \right\rfloor = \left\lceil \frac{z}{M} \right\rceil$ · If we find that $z$ is not a multiple of $M$, we can either modify the input of the rounding downwards function: we have that $\left\lceil \frac{z}{M} \right\rceil = \left\lfloor \frac{z+M}{M} \right\rfloor$' or we can modify its output: $\left\lceil \frac{z}{M} \right\rceil = \left\lfloor \frac{z}{M} \right\rfloor + 1$ .

As a second method, after having computed $B := \left\lfloor \frac{z}{M} \right\rfloor$' , we compute $A = MB$. If $A = z$, then $\left\lceil \frac{z}{M} \right\rceil = B$ ; otherwise, $\left\lceil \frac{z}{M} \right\rceil = B + 1$ .

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

**1.** A calculator (100) with reduced time dependence on the input, the calculator being configured to compute an integer arithmetic operation ($g$), the calculator comprising

- an input interface (110) configured to receive an integer first input ($Y$), the calculator being configured to compute the result of applying the integer arithmetic operation to at least the first input ($Y$), and
- a processor circuit configured to

  - obtain an initial approximation of the operation result ($g(Y)$) from the first input,
  - perform an iterated approximation to obtain a series of approximations of the operation result, the iterated approximation comprising

    - in a first iteration, applying an integer function ($f$) to the initial approximation obtaining an approximation in the series,
    - in subsequent iterations, obtaining a next approximation in the series by applying the integer function ($f$) to the approximation in the series previously computed by the integer function, the integer function converging to at least within a threshold of the operation result, wherein the iteration is applied a predetermined number of times which is independent from the received first input ($Y$), and

  - obtain the operation result from an approximation in the series.

2. A calculator as in Claim 1, wherein the storage stores an initial approximation table, the processor circuit being arranged to obtain the initial approximation from the initial approximation table.

3. A calculator as in Claim 2, wherein the first input ($Y$) is represented in the calculator as a sequence of digits in a fixed-radix or mixed-radix format, the initial approximation table being configured to receive as input at least the position in the sequence of the most-significant non-zero digit of the first input ($Y$).

4. A calculator as in Claim 3, wherein the initial approximation table is configured to receive as input further the value of the most-significant non-zero digit of the first input ($Y$).

5. A calculator as in Claim 3 or 4, wherein the processor circuit is configured to

   - compute a conversion of the first input from a residue number system to the fixed or mixed radix system, and/or
   - compute a conversion of the arithmetic operation result from the fixed or mixed radix system to a residue number system.

6. A calculator as in any one of the preceding claims, wherein the approximation, the initial approximation and the arithmetic operation result are represented in the calculator in an encoded form, the integer function ($f$) being implemented as an encoded table-network.

7. A calculator as in any one of the preceding claims, wherein a first and second parameter are defined for the initial approximation table, so that the initial approximation $x_0$ lies in a first range defined by the first parameter times the arithmetic operation result and the second parameter times the arithmetic operation result, the first parameter being at most 1, the second parameter being at least 1, wherein the first and second parameters are predetermined.

8. A calculator as Claim 7, wherein the first parameter is ½ and the second parameter is 1.

9. A calculator as in any one of the preceding claims, wherein the arithmetic operation is integer division, the first input being an integer divisor, the approximation (x) being an approximation to the integer quotient of a fixed integer dividend ($M$) and the received first input ($Y$).

10. A calculator as Claim 9, wherein the initial approximation for values of the first input below a threshold lies in a second range defined by a further first parameter and a further second parameter, the further first parameter being larger than the first parameter and/or the further second parameter being smaller than the second parameter.

11. A calculator as in claim 9 or 10, wherein

    - the input interface is configured to receive an integer second input ($X$),
    - the processor circuit being configured to

- compute the product of the second input and the integer quotient of claim 9 divided by the fixed integer dividend (*M*).

12. A calculator as in any one of the preceding claims, wherein the processor circuit is configured to apply a correction, said correction comprising conditionally adding a correction to the approximation of the iteration, and/or selecting a largest or smallest integer function result from two or more final rounds of the iteration.

13. A cryptographic device comprising the calculator as in any one of the preceding claims, the cryptographic device having an input interface arranged to receive a message, and a processor circuit to encrypt, decrypt, or sign the message using the calculator.

14. A compiler device comprising

- an input interface (442) configured to receive an arithmetic expression,
- a processor circuit configured to

- parse the arithmetic expression obtaining a list of primitive arithmetic operators, a primitive arithmetic operator taking as input one or more constants and/or results of further primitive arithmetic expressions,
- generating computer code implementing the list of primitive arithmetic operators, wherein the computer code has reduced time dependence on said inputs of the primitive arithmetic operators, wherein at least part of the generated computer code implements a calculator according to any one of the preceding claims.

15. A calculating method (300) with reduced time dependence on the input, the calculating method computing an integer arithmetic operation (*g*), the calculating method comprising

- receiving (310) an integer first input (*Y*), the calculating method being configured to compute the result of applying the integer arithmetic operation to at least the first input (*Y*),
- obtaining (320) an initial approximation of the operation result ($g(Y)$) from the first input,
- performing (330) an iterated approximation to obtain a series of approximations of the operation result, the iterated approximation comprising

- in a first iteration, applying (340) an integer function (*f*) to the initial approximation obtaining an approximation in the series,
- in subsequent iterations, obtaining (350) a next approximation in the series by applying the integer function (*f*) to the approximation in the series previously computed by the integer function, the integer function converging to at least within a threshold of the operation result, wherein the iteration is applied a predetermined number of times which is independent from the received first input (Y),

- obtaining (360) the operation result from an approximation in the series.

16. A compiling method (450) comprising

- receiving (460) an arithmetic expression,
- parsing (470) the arithmetic expression obtaining a list of primitive arithmetic operators, a primitive arithmetic operator taking as input one or more constants and/or results of further primitive arithmetic expressions,
- generating (480) computer code implementing the list of primitive arithmetic operators, wherein the computer code has reduced time dependence on said inputs of the primitive arithmetic operators, wherein at least part of the generated computer code implements a calculating method according to claim 15.

17. A computer readable medium (1000) comprising transitory or non-transitory data (1020) representing instructions to cause a processor system to perform the method according to claim 15 or 16.

*Fig. 1*

| 206 | 205 | 204 | 203 | 202 | ... | 201 | 200 |

212

225

230

*Fig. 2a*

| 206 | 205 | 204 | 203 | 202 | ... | 201 | 200 |

242    243

255

260

*Fig. 2b*

| 206 | **205** | 204 | **203** | **202** | ... | 201 | <u>200</u> |

```
            205 ─────┐          204 ─────┐
                     │                    │
          ┌──────────┼──────────┬─────────┘
          ▼          ▼          ▼
        ┌────┐     ┌────┐     ┌────┐
        │272 │     │273 │     │274 │
        └──┬─┘     └──┬─┘     └──┬─┘
           │          │          │
           └──────────┼──────────┘
                      ▼
              ┌──────────────┐
              │     285      │
              └──────┬───────┘
                     │
                     └──────────────┐
                                    ▼
                            ┌──────────────┐
                            │     290      │
                            └──────────────┘
```

## Fig. 2c

```
                        ┌──────────────┐
                        │     310      │     <u>300</u>
                        └──────┬───────┘
                               │
                        ┌──────────────┐
                        │     320      │
                        └──────┬───────┘
                               │
                        ┌──────────────┐    ⎫
                        │     340      │    ⎪
                        └──────┬───────┘    ⎪
                               │     ┌────┐ ⎬  330
                        ┌──────────────┐    ⎪
                        │     350      │    ⎪
                        └──────┬───────┘    ⎭
                               │
                        ┌──────────────┐
                        │     360      │
                        └──────────────┘
```

## Fig. 3

420

410

421

431

422

432

433

434

**Fig. 4b**

460

450

440

442

470

444

480

446

**Fig. 4c**

**Fig. 4a**

*Fig. 5a*

*Fig. 5b*

Europäisches
Patentamt

European
Patent Office

Office européen
des brevets

# EUROPEAN SEARCH REPORT

Application Number

EP 17 17 4335

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RODEHEFFER T: "Software Integer Division", ANNOUNCEMENT MICROSOFT RESE, US, 26 August 2008 (2008-08-26), pages 1-17, XP007915946, | 1-4,7-17 | INV. G06F7/535 |
| Y | * section 4, 4.1, 4.3; figures 11, 13 * | 5,6 | |
| X | WONG D ET AL: "FAST DIVISION USING ACCURATE QUOTIENT APPROXIMATIONS TO REDUCE THE NUMBER OF ITERATIONS", IEEE TRANSACTIONS ON COMPUTERS, IEEE, USA, vol. 41, no. 8, 1 August 1992 (1992-08-01), pages 981-995, XP000298592, ISSN: 0018-9340, DOI: 10.1109/12.156541 | 1-4,7-17 | |
| Y | * section IIB, IIC * | 5,6 | |
| X | NENADIC N M ET AL: "Fast Division on Fixed-Point DSP Processors Using Newton-Raphson Method", COMPUTER AS A TOOL, 2005. EUROCON 2005.THE INTERNATIONAL CONFERENCE ON BELGRADE, SERBIA AND MONTENEGRO 21-24 NOV. 2005, PISCATAWAY, NJ, USA,IEEE, PISCATAWAY, NJ, USA, vol. 1, 21 November 2005 (2005-11-21), pages 705-708, XP010916191, DOI: 10.1109/EURCON.2005.1630028 ISBN: 978-1-4244-0049-2 | 1-4,7-17 | TECHNICAL FIELDS SEARCHED (IPC) G06F |
| Y | * section III, V * | 5,6 | |

-/--

The present search report has been drawn up for all claims

| Place of search | Date of completion of the search | Examiner |
|---|---|---|
| Munich | 2 November 2017 | Prins, Leendert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 17 17 4335

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GARG HARI KRISHNA ET AL: "New Residue Arithmetic Based Barrett Algorithms: Modular Integer Computations", IEEE ACCESS, vol. 4, 16 September 2016 (2016-09-16), pages 4882-4890, XP011622816, DOI: 10.1109/ACCESS.2016.2599269 [retrieved on 2016-09-13] * abstract * | 5 | |
| Y | Mattias Beimers: "White-box cryptography - Implementing cryptographic algorithms in hostile environments", , 12 November 2014 (2014-11-12), XP055287214, Retrieved from the Internet: URL:https://mattiasbeimers.nl/docs/Report-WBC-Mattias.pdf [retrieved on 2016-07-11] * section 2.1, 5.1 * | 6 | |
| A,D | MARC JOYE AND KARINE VILLEGAS GEMPLUS CARD INTERNATIONAL ET AL: "A Protected Division Algorithm", USENIX,, 11 November 2002 (2002-11-11), pages 1-7, XP061009597, [retrieved on 2002-11-11] | 1-17 | |

TECHNICAL FIELDS
SEARCHED (IPC)

The present search report has been drawn up for all claims

| Place of search | Date of completion of the search | Examiner |
|---|---|---|
| Munich | 2 November 2017 | Prins, Leendert |

EPO FORM 1503 03.82 (P04C01)